# EUROPEAN PATENT SPECIFICATION

(11) **EP 1 396 751 B1**
(45) Date of publication and mention of the grant of the patent: **16.11.2005**
(21) Application number: 02256118.7
(22) Date of filing: 03.09.2002
(51) Int. Cl.: G02F 1/09, G02F 1/01, G02B 6/26

(54) **Combined optical variable attenuator and isolator, and method of assembly**
Kombinierter optischer variabler Abschwächer und Isolator, und Montageverfahren
Atténuateur variable et isolateur optiques combinés, et leur procédé d'assemblage

(43) Date of publication of application: 10.03.2004
(73) Proprietor: Agilent Technologies, Inc. - a Delaware corporation -, Palo Alto, CA 94303-0870 (US)
(72) Inventor: Harker, Andrew Thomas, Ipswich, Suffolk IP4 5QE (GB); Crouch, Jeremy Paul, Stowmarket, Suffolk IP4 6JB (GB); Meadowcroft, Simon, Stowmarket, Suffolk IP14 1TY (GB)
(74) Representative: Coker, David Graeme

(56) References cited:
- EP-A- 1 361 473
- GB-A- 2 345 761
- MUNIN E: "ANALYSIS OF A TUNABLE BANDPASS FILTER BASED ON FARADAY ROTATORS" IEEE TRANSACTIONS ON MAGNETICS, IEEE INC. NEW YORK, US, vol. 32, no. 2, 1 March 1996 (1996-03-01), pages 316-319, XP000555498 ISSN: 0018-9464
- PATENT ABSTRACTS OF JAPAN vol. 016, no. 252 (P-1367), 9 June 1992 (1992-06-09) & JP 04 060511 A (NIPPON TELEGR & TELEPH CORP), 26 February 1992 (1992-02-26)
- PATENT ABSTRACTS OF JAPAN vol. 1999, no. 04, 30 April 1999 (1999-04-30) & JP 11 002781 A (TDK CORP), 6 January 1999 (1999-01-06)

## Description

The invention relates to arrangements for providing the functions of variable attenuation and isolation.

In the prior art, the variable attenuation and isolation functions are currently provided by separate subassemblies. For instance, the isolator may be co-packaged with a laser in an industry standard "butterfly" package while the variable attenuation function is provided by a variable optical attenuator packaged in a separate hermetic pigtailed package. The pigtail of the "butterfly" package is connected to the pigtail of the attenuator package either by using optical connectors or by splicing.

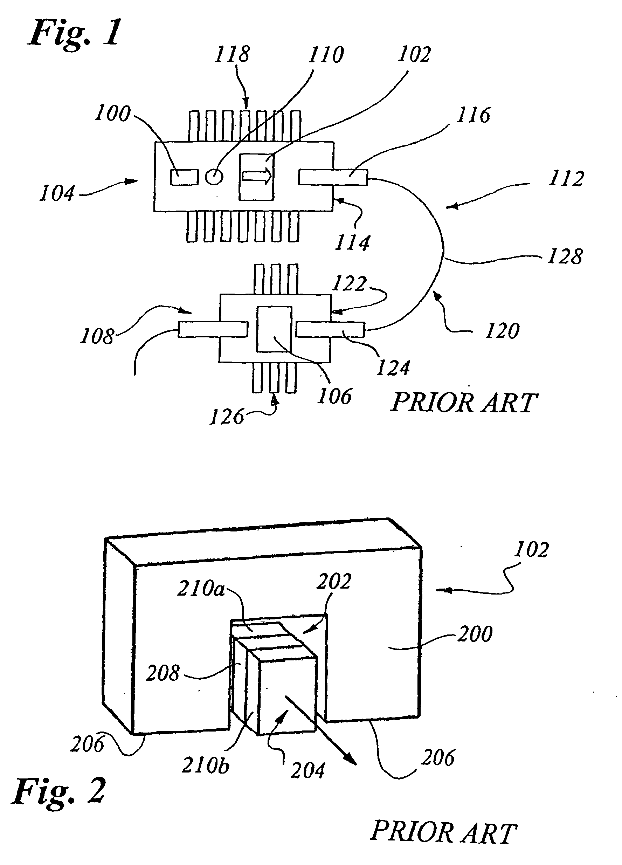

This kind of prior art arrangement is shown in Fig. 1, where a laser 100 and an isolator 102 are co-packaged in an industry standard "butterfly" package 104 and a variable optical attenuator (briefly VOA) 106 is separately packaged in a hermetic package 108. Light from the laser 100 is focussed by a ball lens 110 through the isolator 102 into a fibre pigtail 112, which is secured to a wall 114 of the package 104 by a ferrule 116. Electrical connections (not shown) are made from the laser 100 to the leads 118 of the package 104.

Similarly, the fibre pigtail 120 of the VOA package 108 is secured to a wall 122 of the package 108 by a ferrule 124. Electrical connections (not shown) are made from the VOA 106 to the leads 126 of the package 108. The pigtail 112 is connected to the pigtail 120 by a splice 128.

This arrangement is disadvantageous firstly in that it requires two hermetic pigtailed packages, which are costly and bulky, and secondly in that it requires the pigtails to be joined. Splicing has the advantage of a low loss and stable connection, but is a difficult process and requires that the transmitter and VOA are mounted on the same circuit pack, thus reducing the number of transmitters which can be mounted on the circuit pack, and hence in the rack.

Patchcords are simpler to use but connectors have generally higher and more variable losses than splices. Generally there would be a connection between the transmitter pigtail and the patchcord at the front panel of the transmitter circuit pack and a connection between the patchcord and the VOA pigtail at the front panel of the VOA circuit pack. The VOA circuit packs may be positioned on a shelf below the transmitter circuit packs, hence reducing the number of shelves available for transmitters and the number of transmitters which can be mounted in the rack.

There is a further disadvantage. With conventional pigtails and patchcords the state of polarisation at the input to the VOA is unknown and so the VOA has to be of the polarisation independent type, which is typically larger, more complex and more expensive than a polarisation dependent type. Alternatively polarisation maintaining (PM) pigtails and patchcords could be used. PM fibre is more expensive than standard fibre and assembling transmitters and patchcords with PM fibre is more difficult than with standard fibre.

Fig. 2 is a perspective view of an optical isolator 102 suitable for co-packaging in a package with a laser. The isolator shown is a development, disclosed in US-A-6 055 102, of a type first described in 'Compact Optical Isolator", F. J. Sansalone, Applied Optics, Vol. 10 No. 10, pp. 2329-2331, October 1971. A garnet material is used as the Faraday rotator and a rare earth magnet provides the magnetic field. The isolator 102 comprises a magnet 200 having a square sided opening 202 in which is located an isolator element 204. The magnet 200 is generally U-shaped in cross-section, and comprises two mounting areas 206. which lie within the same plane, for mounting the optical isolator 102 on a planar surface. The isolator element 204 is a laminate comprising a Faraday rotator 208 sandwiched between an "input" polariser 210a and an "output" polariser 210b.

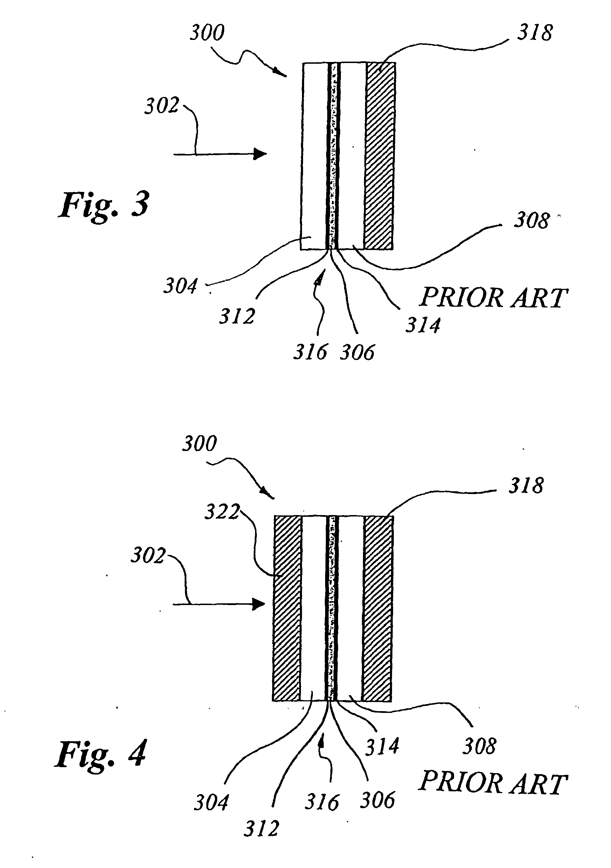

Fig.3 is a schematic of a liquid crystal variable optical attenuator 300. A polarised collimated light beam 302 is incident from the left through a first glass plate 304, a thin layer of liquid crystal material 306 and a second glass plate 308. The inner faces of the glass plates 304, 308 are covered with transparent, conductive material, such as indium tin oxide, to form electrodes 312, 314. The components 304 to 314 comprise a liquid crystal cell 316. Finally the light is incident on a polariser 318. As the light propagates through the liquid crystal material 306 its plane of polarisation rotates, and the angle of rotation depends on the RMS value of the potential between the electrodes, and so the fraction transmitted by the polariser 318 varies in response to the RMS value of the potential between the electrodes, which is controlled by a controller (not shown). It will be appreciated that in order to reach the maximum attenuation it is necessary that the plane of polarisation of the collimated light beam 302 is aligned accurately, generally orthogonally, to the plane of polarisation of the polariser 318.

Fig. 4 is a schematic of an alternative liquid crystal variable optical attenuator 300 that, in addition to the elements shown in Fig.3, comprises a second polariser 322 arranged before the first glass plate 304 to establish the polarisation state of the light incident on the liquid crystal cell 316 as the polarisers 318, 322 can be aligned more conveniently as part of the same assembly than the plane of polarisation of the collimated light beam 302 can be aligned to the plane of polarisation of the polariser 318.

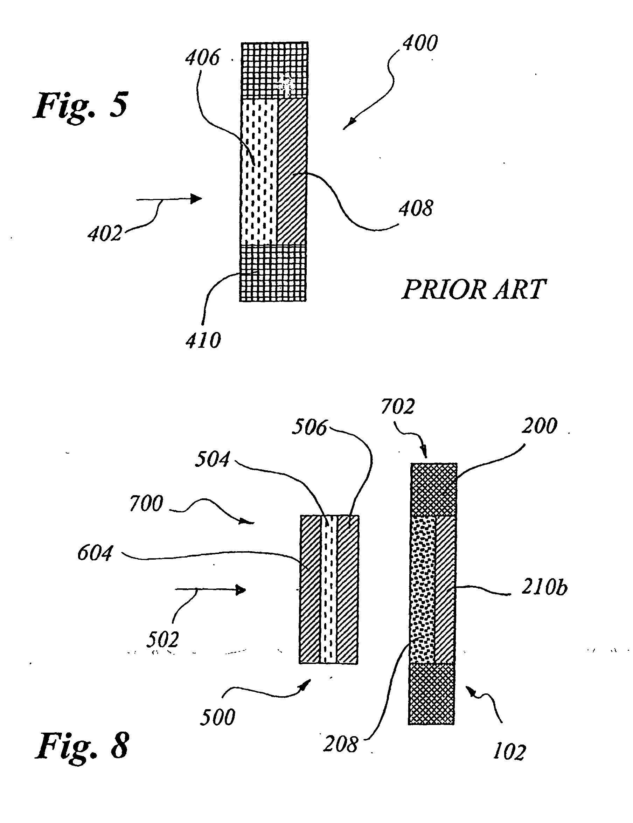

Fig.5 is a schematic section of a Faraday rotator variable optical attenuator 400. A polarised collimated light beam 402 is incident from the left through a Faraday rotator material 406 and a polariser 408. The Faraday rotator material 406 and polariser 408 are located within a solenoid 410. As the light propagates through the Faraday rotator material 406 its plane of polarisation rotates, and the angle of rotation depends on the value of the magnetic field generated by the current flowing in the solenoid 410, and so the fraction transmitted by the polariser varies in response to the current flowing in the solenoid 410, which is controlled by a controller (not shown).

It will be noted that the variable optical attenuators 300 and 400 essentially comprise a polarisation rotating means (e.g. the liquid crystal cell 316 or the Faraday rotator material 406) followed by a polariser 318 or 408.

A somewhat similar arrangement is disclosed in US-A-5 978 135. There, an arrangement substantially like an optical isolator, that is with a polariser arranged before a magneto-optic element to establish the polarisation state of the light incident on the magneto-optic element (see Fig. 4) is disclosed where appropriate choice of the composition of the magneto-optic element can result in a thermally variable rotation of the plane of polarisation and thus a variable optical attenuator.

European Patent Application No. 03010459.0 (publication number EP 1 361 473 A, relevant under Art. 54(3) EPC) discloses an integrated magneto optical modulator with an optical isolator which comprises an optical isolator unit, a magneto optical modulator unit, and an impedance adjustor. Here the optical isolator unit and magneto optical modulator unit are contained in a single package.

The object of the present invention is to provide the functions of variable attenuation and isolation to an optoelectronic module in a manner that has reduced piece part count and is more compact and cheaper than the prior art.

A module comprising a variable optical attenuator and an optical isolator is known from GB 2 345 761 A, upon which the preamble of the independant claims is based.

According to the present invention, that object is achieved thanks to an arrangement having the features set forth in the claims that follow. The invention also relates to components for such an arrangement as well as to a method for assembling such an arrangement.

The invention provides an integrated variable optical attenuator (VOA) and isolator, which has the advantages of: compact size, because only one hermetic package is required and there are no connecting pigtails; ease of use, because there is no requirement to join pigtails; and reduced cost, because only one hermetic package is required and there is no requirement to join pigtails.

There are additional advantages to further reduce the size and cost as, because the VOA and isolator are integrated, there is no uncertainty in the polarisation state and hence the VOA can be of the cheaper and more compact polarisation dependent type. Furthermore isolators and some VOAs have polarisers at their inputs and outputs and by integrating the VOA and isolator one polariser can be eliminated, further reducing size and cost.

The invention will now be described, by way of example only, with reference to the annexed figures of drawing, wherein:
- Figures 1 to 5, related to the prior art, were described previously,
- Figures 6 and 7 are cross sectional views of two embodiments of an arrangement according to the invention, and
- Figure 8 schematically depicts a method of assembling an arrangement according to the invention starting from components thereof.

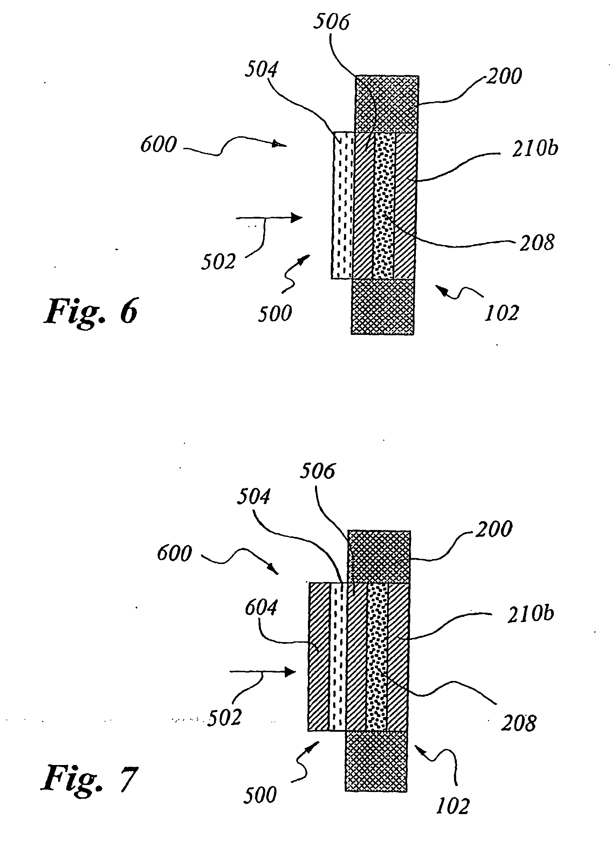

Fig.6 shows a variable optical attenuator 500 placed in the same polarised collimated light beam 502 as an isolator 102, the VOA 500 and the isolator 102 comprising an integrated assembly designated 600.

The VOA essentially comprises a polarisation rotating medium 504 and a polariser 506. The polarisation rotation medium can be e.g. a liquid crystal cell 316 with associated electrodes 312, 314 or a Faraday rotator material 406 having associated a solenoid 410, such details having been shown in Figs. 3 to 5.

The isolator 102 is essentially of the kind shown in Fig. 2, and includes a laminate comprising a Faraday rotator 208 sandwiched between an input polariser and an output polariser.

For that reason, throughout Figs. 6 to 8, elements or parts identical or equivalent to elements or parts already described in connection with Figures 2 to 5 are denoted by the same reference numerals already appearing in those previous figures.

The arrangement of the invention is based on the recognition that the VOA 500 and the isolator 102 may share a common polariser that is in fact represented by the polariser designated 506. This is interposed between the polarisation rotation medium or material 504 of the variable optical attenuator and the rotator 208 of the polariser, so that in polariser 506 also plays the role of the input polariser of the optical isolator.

Fig. 7 shows an alternative embodiment of an integrated VOA and isolator assembly 600 of the present invention in which the VOA 500 is supplemented with an additional polariser 604 to improve the maximum attenuation. In such an alternative arrangement the polarisation rotation medium 504 of the variable optical attenuator 500 is thus sandwiched between the additional polariser 604 and the polariser 506 that is common to the variable optical attenuator and the optical isolator.

It will be appreciated that in the prior art arrangement shown in Fig. 1 there are many potential sources of reflection between the isolator and the VOA and so, if the positions of the isolator and VOA were exchanged, the laser would be more susceptible to perturbation.

In the arrangements of Figs. 6 and 7, the only additional upstream component is the VOA, which can be designed to minimise back reflection, and so the order of the components may be determined using other criteria, e.g. geometrical.

While an integrated assembly such as shown in Fig. 6 or Fig. 7 is most advantageous, it may be that such a component cannot be conveniently sourced as the VOA and isolator technologies may not both be available to a single component company.

In this case, the assembly 600 may be separated into two portions 700, 702 as shown in Fig. 8, where the VOA function and the isolation function are primarily performed by a first portion or component 700 and by a second portion or component 702, respectively.

The arrangements shown in Figs.6 and 7 can thus be assembled by:
- providing the first component 700 including the polarisation rotation medium 504 of the VOA 500, the common polariser 506 connected in optical alignment, and possibly the polariser 604,
- providing the second component 702 including the optical rotator 208 of the isolator 102 connected to the output polariser 210b, and
- assembling the first 700 and second 702 component by causing the common polariser 506 to be interposed between the polarisation rotation medium 504 and the optical rotator 208.

It is advantageous for the first component 700 to comprise the "common" polariser 506 (rather than the second component 702 to comprise the polariser 506) as the polariser 506 can be well aligned to polariser 604 to reach the maximum attenuation while the alignment between the first component 700 and second component 702 is less critical for the values of isolation typically required.

The two Faraday rotators included in the isolator 102 and the VOA 500 could be both garnet materials. Advantageously, they may be different materials. For example, the isolator material could be the 'latching' type referred to in US-A-5 978 135, which does not respond to small external magnetic fields, whereas the VOA material must respond to the variable field of the solenoid.

Of course, without prejudice to the underlying principle of the invention, the details and embodiments may vary with respect to what has been described and shown by way of example only, without departing from the scope of the invention as defined by the claims that follow.

## Claims

1. An arrangement including:
- a variable optical attenuator (500), and
- an optical isolator (102) including an optical rotator (208), said arrangement forming an integrated variable optical attenuator and isolator assembly,
**characterised in that**
said variable optical attenuator includes a polarisation rotation medium (504) including a liquid crystal cell (316), and **in that** said arrangement further includes a polariser (506) interposed between said polarisation rotation medium (504) and said optical rotator (208), whereby said polariser (506) is common to both said variable optical attenuator (500) and said optical isolator (102).

2. An arrangement including:
- a variable optical attenuator (500), and
- an optical isolator (102) including an optical rotator (208), said arrangement forming an integrated variable optical attenuator and isolator assembly,
**characterised in that**
said variable optical attenuator includes a polarisation rotation medium (504) including a Faraday rotator material (406) and a solenoid (410) for generating a magnetic field through said Faraday rotator material (406), and **in that** said arrangement further includes a polariser (506) interposed between said polarisation rotation medium (504) and said optical rotator (208), whereby said polariser (506) is common to both said variable optical attenuator (500) and said optical isolator (102).

3. The arrangement of any of the previous claims, **characterised in that** it includes an additional polariser (604) associated with said polarisation rotation medium (504) in said variable optical attenuator (500), whereby said polarisation rotation medium (504) is sandwiched between said additional polariser (604) and said polariser (506) common to said variable optical attenuator (500) and said optical isolator (102).

4. The arrangement of any of the previous claims, **characterised in that** said optical rotator is a Faraday rotator (208).

5. The arrangement of claim 4, **characterised in that** said optical rotator (208) has associated a magnet (200) with an opening for locating said Faraday rotator (208).

6. The arrangement of either of claims 4 or 5, **characterised in that** said Faraday rotator (208) is a garnet material.

7. A component for the arrangement of any of claims 1 to 6, **characterised in that** it includes said polarisation rotation medium (504) and said common polariser (506) connected in optical alignment.

8. A component for the arrangement of any of claims 1 to 6, **characterised in that** it includes said optical rotator (208) having connected therewith an output polariser (210b).

9. A method of assembling the arrangement of any of claims 1 to 6, **characterised in that** it includes the steps of:
- providing a first component (700) including said polarisation rotation medium (504) and said common polariser (506) connected in optical alignment,
- providing a second component (702) including said optical rotator (208), and
- assembling said first (700) and second (702) components by causing said common polariser (506) to be interposed between said polarisation rotation medium (504) and said optical rotator (208).

## Patentansprüche

1. Eine Anordnung, die folgendes umfasst:
einen variablen optischen Dämpfer (500), und
einen optischen Isolator (102), der einen optischen Rotator (208) umfasst, wobei die Anordnung eine Baugruppe aus einem integrierten, variablen optischen Dämpfer und einem Isolator bildet,
**dadurch gekennzeichnet, dass**
der variable optische Dämpfer ein Polarisations-Rotationsmedium (504) umfasst, das eine Flüssigkristallzelle (316) umfasst, und **dadurch**, dass die Anordnung ferner einen Polarisator (506) umfasst, der zwischen dem Polarisations-Rotationsmedium (504) und dem optischen Rotator (208) positioniert ist, wodurch der Polarisator (506) sowohl dem variablen optischen Dämpfer (500) als auch dem optischen Isolator (102) gemeinsam ist.

2. Eine Anordnung, die folgendes umfasst:
einen variablen optischen Dämpfer (500), und
einen optischen Isolator (102), der einen optischen Rotator (208) umfasst, wobei die Anordnung eine Baugruppe aus einem integrierten variablen optischen Dämpfer und einem Isolator bildet,
**dadurch gekennzeichnet, dass**
der variable optische Dämpfer ein Polarisations-Rotationsmedium (504) umfasst, das ein Faraday-Rotatormaterial (406) und ein Solenoid (410) umfasst, zum Erzeugen eines Magnetfeldes durch das Faraday-Rotatormaterial (406), und **dadurch**, dass
die Anordnung ferner einen Polarisator (506) umfasst, der zwischen dem Polarisations-Rotationsmedium (504) und dem optischen Rotator (208) positioniert ist, wodurch der Polarisator (506) sowohl dem variablen optischen Dämpfer (500) als auch dem optischen Isolator (102) gemeinsam ist.

3. Die Anordnung gemäß einem der vorhergehenden Ansprüche, **dadurch gekennzeichnet, dass** sie einen zusätzlichen Polarisator (604) umfasst, der dem Polarisations-Rotationsmedium (504) in dem variablen optischen Dämpfer (500) zugeordnet ist, wodurch das Polarisations-Rotationsmedium (504) sandwichartig zwischen dem zusätzlichen Polarisator (604) und dem Polarisator (506) angeordnet ist, der dem variablen optischen Dämpfer (500) und dem optischen Isolator (102) gemeinsam ist.

4. Die Anordnung gemäß einem der vorhergehenden Ansprüche, **dadurch gekennzeichnet, dass** der optische Rotator ein Faraday-Rotator (208) ist.

5. Die Anordnung gemäß Anspruch 4, **dadurch gekennzeichnet, dass** der optische Rotator (208) einen zugeordneten Magneten (200) mit einer Öffnung zum Lokalisieren des Faraday-Rotators (208) aufweist.

6. Die Anordnung entweder gemäß Anspruch 4 oder 5, **dadurch gekennzeichnet, dass** der Faraday-Rotator (208) ein Granatmaterial ist.

7. Eine Komponente für die Anordnung gemäß einem der Ansprüche 1 bis 6, **dadurch gekennzeichnet, dass** sie das Polarisations-Rotationsmedium (504) und den gemeinsamen Polarisator (506) aufweist, die in optischer Ausrichtung verbunden sind.

8. Eine Komponente für die Anordnung gemäß einem der Ansprüche 1 bis 6, **dadurch gekennzeichnet, dass** sie den optischen Rotator (208) umfasst, der einen Ausgangspolarisator (210b) aufweist, der mit demselben verbunden ist.

9. Ein Verfahren zum Anordnen der Anordnung gemäß einem der Ansprüche 1 bis 6, **dadurch gekennzeichnet, dass** dasselbe folgende Schritte aufweist:
Bereitstellen einer ersten Komponente (700), die das Polarisations-Rotationsmedium (504) und den gemeinsamen Polarisator (506) aufweist, die in optischer Ausrichtung verbunden sind,
Bereitstellen einer zweiten Komponente (702), die den optischen Rotator (208) umfasst, und
Anordnen der ersten (700) und der zweiten (702) Komponente durch Verursachen, dass der gemeinsame Polarisator (506) zwischen dem Polarisations-Rotationsmedium (504) und dem optischen Rotator (208) positioniert wird.

## Revendications

1. Système incluant :
- un atténuateur optique variable (500), et
- un isolateur optique (102) incluant un rotateur optique (208), ledit système formant un ensemble intégré d'atténuateur optique variable et d'isolateur,
**caractérisé en ce que**
ledit atténuateur optique variable inclut un milieu (504) de rotation de polarisation, incluant une cellule (316) de cristaux liquides, et **en ce que**
ledit système inclut en outre un polariseur (506) interposé entre ledit milieu (504) de rotation de polarisation et ledit rotateur optique (208), au moyen de quoi ledit polariseur (506) est commun et audit atténuateur optique variable (500), et audit isolateur optique (102).

2. Système incluant:
- un atténuateur optique variable (500), et
- un isolateur optique (102) incluant un rotateur optique (208), ledit système formant un ensemble intégré d'atténuateur optique variable et d'isolateur,
**caractérisé en ce que**
ledit atténuateur optique variable inclut un milieu (504) de rotation de polarisation, incluant un matériau (406) de rotateur de Faraday et un solénoïde (410) destiné à produire un champ magnétique à travers ledit matériau (406) de rotateur de Faraday, et **en ce que**
ledit système inclut en outre un polariseur (506) interposé entre ledit milieu (504) de rotation de polarisation et ledit rotateur optique (208), au moyen de quoi ledit polariseur (506) est commun et audit atténuateur optique variable (500), et audit isolateur optique (102).

3. Système selon l'une quelconque des revendications précédentes, **caractérisé en ce qu'**il inclut un polariseur (604) supplémentaire, associé audit milieu (504) de rotation de polarisation dans ledit atténuateur optique variable (500), au moyen de quoi ledit milieu (504) de rotation de polarisation est intercalé entre ledit polariseur (604) supplémentaire et ledit polariseur (506), commun audit atténuateur optique variable (500) et audit isolateur optique (102).

4. Système selon la revendication 4, **caractérisé en ce que** ledit rotateur optique est un rotateur de Faraday (208).

5. Système selon l'une quelconque des revendications précédentes, **caractérisé en ce que** ledit rotateur optique (208) a un aimant (200), qui lui est associé, comprenant une ouverture destinée à positionner ledit rotateur de Faraday (208).

6. Système selon l'une quelconque des revendications 4 et 5, **caractérisé en ce que** ledit rotateur de Faraday (208) est un matériau de grenat.

7. Composant pour le système selon l'une quelconque des revendications 1 à 6, **caractérisé en ce qu'**il inclut ledit milieu (504) de rotation de polarisation et ledit polariseur (506) commun, connectés en alignement optique.

8. Composant pour le système selon l'une quelconque des revendications 1 à 6, **caractérisé en ce qu'**il inclut ledit rotateur optique (208) ayant, connecté à celui-ci, un polariseur (210b) de sortie.

9. Procédé d'assemblage du système selon l'une quelconque des revendications 1 à 6, **caractérisé en ce qu'**il inclut les étapes suivantes :
- fournir un premier composant (700) incluant ledit milieu (504) de rotation de polarisation et ledit polariseur (506) commun, connectés en alignement optique,
- fournir un deuxième composant (702) incluant ledit rotateur optique (208), et
- assembler lesdits premier (700) et deuxième (702) composants en faisant en sorte que ledit polariseur (506) commun soit interposé entre ledit milieu (504) de rotation de polarisation et ledit rotateur optique (208).
